# EUROPEAN PATENT APPLICATION

(11) **EP 4 776 085 A1**
(43) Date of publication of application: **15.07.2026**
(21) Application number: 25218834.7
(22) Date of filing: 26.11.2025
(51) Int. Cl.: G05B 15/02, G05B 19/19

(54) **APPARATUS AND METHOD FOR CONTROLLING A REPETITIVE MOTION LINEAR ACTUATOR**

(30) Priority: 14.01.2025 US 202519020596
(71) Applicant: Flowserve Pte. Ltd., Singapore 637345 (SG)
(72) Inventor: Steffen, Joshua Wayne, Prior Lake, MN (US); Neeser, Ian Timothy, Burnsville, MN (US)
(74) Representative: Petraz, Gilberto Luigi

(57) **Abstract**

An apparatus and method of controlling a repetitive motion linear actuator (RMLA) accepts a minimum repetition rate and a commanded repetition rate. If the commanded rate is greater than the minimum rate, the RMLA automatically operates in a speed scaling mode by continuously applying the cycles and scaling the cycle length to provide the commanded rate. If the commanded rate is less than the minimum rate, the RMLA automatically operates in a dwell mode by fixing the cycle length and discontinuously applying the cycles, while adjusting a separation between the cycles to provide the commanded rate. In dwell mode, the cycle length can be equal to its maximum allowed value Tₘₐₓ, or can equal a desired value less than Tₘₐₓ. The cycle can have any profile shape, such as a sinusoidal shape or a shape that includes periods of deceleration and acceleration separated by constant speed periods therebetween.

## Description

### FIELD OF THE INVENTION

The invention relates to repetitive motion actuators, and more particularly, to apparatus and methods for controlling a repetitive motion linear actuator.

### BACKGROUND OF THE INVENTION

Repetitive motion linear actuators (RMLAs) are widely used in many applications, including ball-screw actuators and hydraulic cylinder actuators, such as actuators for pistons in positive displacement pumps. The operation of an RMLA can generally be characterized in terms of its cycle rate, also referred to as its repetition rate (rep rate), and its motion profile shape. In general, the motion profile shape can be any applicable shape that can be continuously repeated, such as a sinusoid or sawtooth. In some cases, the motion profile shape combines periods of deceleration and acceleration near extremes of the RMLA repetitive movement with linear motion at a constant speed between the extremes of the RMLA movement.

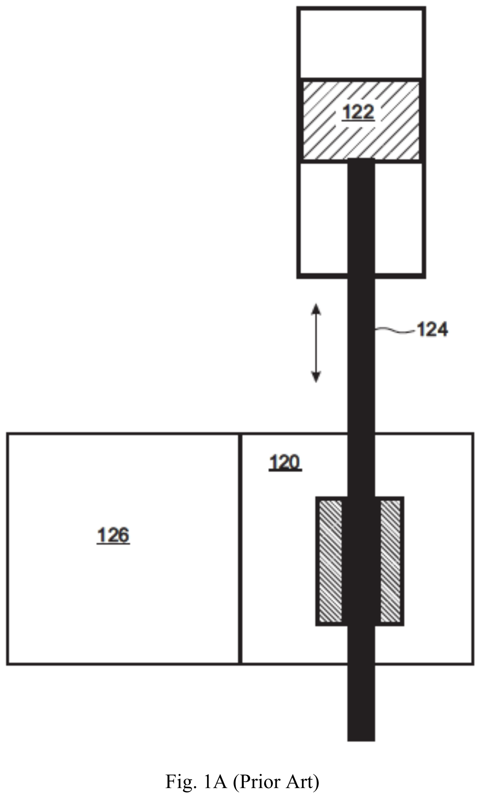

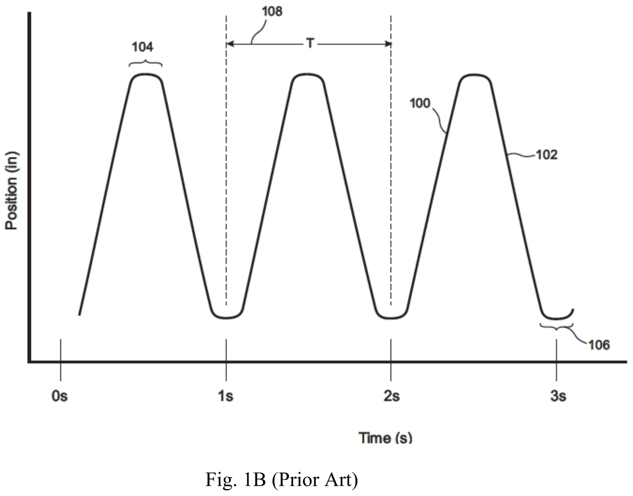

For simplicity of explanation, with reference to Fig. 1A, the present disclosure is presented primarily with reference to an RMLA **120** that is configured under control of a controller **126** to actuate a piston **122** driven by a shaft **124.** With reference to Fig. 1B, it is assumed that the movement speed of the piston **122** combines movements at a constant speed **100, 102** with acceleration that is applied **104, 106** when slowing and reversing the linear motion. The movement speed of the actuated element of an RMLA is referred to generically herein as the "piston speed," and the periods of deceleration and acceleration are referred to herein as the "tops" **104** and "bottoms" **106** of the piston "strokes." However, it will be understood that the present invention is not limited to the actuation of pistons, but is applicable to a wide variety of applications that require repetitive linear actuation according to any applicable motion profile shape.

In general, the efficiency of a process driven by an RMLA, such as a piston-based positive displacement pump, will depend on the motion profile shape of the linear actuation, which in the example of Fig 1B will be characterized primarily by the piston speed during the constant speed portions **100, 102** of its up **100** and down **102** "strokes," and by the rates of deceleration and acceleration at the tops **104** and bottoms **106** of the piston strokes. The total time that is required to complete one cycle of motion, i.e. one "up" stroke followed by one "down" stroke of the piston, is referred to herein as the "cycle length" T **108** of the repetitive motion. In the example of Fig. 1B, the repetition rate is 1 cycle per second, or 60 cycles per minute (CPM), and the cycle length T is 1 second, which is the inverse of the repetition rate.

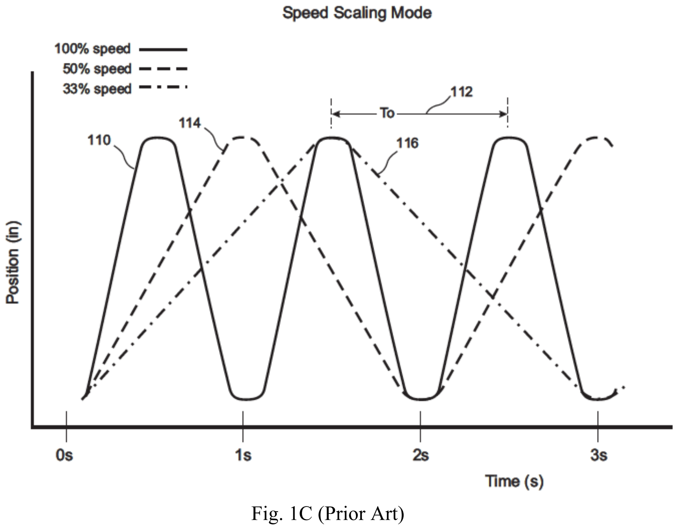

With reference to Fig. 1C, the repetition rate of an RMLA can be varied simply by scaling the width of the motion profile shape. This approach is referred to herein as "speed scaling." Optimum efficiency of a driven process, referred to herein as the "process efficiency," will generally be realized when the cycle length is equal to an optimal cycle length Tₒ **112,** and will suffer if the cycle length is made shorter or longer than Tₒ **112.** For some applications, the cycle length at which the actuator performs ideally, referred to herein as the "desired" cycle length T_{d}, will be equal to Tₒ **112,** while for other applications the disadvantage of reduced process efficiency resulting from increasing **114** T **108** beyond its optimal value Tₒ **112** may be more than compensated by a reduction in the dynamic loads and shock loads that are applied to other mechanical parts of the system, such as the mounting structures of the apparatus, such that T_{d} is greater than To **112.** However, for some processes it can become necessary to extend T 108 beyond T_{d}, which can lead to excessive speed scaling **116** that can cause the process efficiency to fall below a minimum acceptable level.

What is needed, therefore, is an apparatus and method for optimizing the operation of a process that is driven by a linear actuator over a wide range of reduced actuator repetition rates.

### SUMMARY OF THE INVENTION

The present invention is an apparatus and method for optimizing the operation of a process that is driven by a linear actuator over a wide range of reduced actuator repetition rates.

When it becomes necessary to increase the repetition rate of an RMLA by speed scaling, such that the cycle length T of the motion profile shape is less than the optimal efficiency value Tₒ, a loss of process efficiency may be unavoidable. The present invention is an apparatus and method for maintaining optimal system operation when it is necessary to reduce the repetition rate of an RMLA such that T would be longer than T_{d} if the rep rate reduction was due entirely to speed scaling.

In particular, the present invention implements a "dwell mode" of RMLA operation in which the motion profile shape and cycle length are maintained as the rep rate is decreased. Instead of maintaining continuous actuation, in dwell mode the actuation cycles of the RMLA are discontinuous, in that discrete actuations are applied, such as single up and down strokes of a piston, which are separated by stationary periods Tₛ during which there is no actuation, so that the actuation cycles are separated by a repetition period Tᵣ, and are applied at the desired repetition rate without lengthening T. This approach enables the repetition rate to be extended almost without limit, although in some embodiments a maximum repetition period Tᵣₘₐₓ applies, such that Tᵣ is not allowed to exceed Tᵣₘₐₓ, even when the RMLA is operating in dwell mode.

Various strategies can be applied when reducing the rep rate, such that the process efficiency remains above a minimum acceptable level even for very slow rep rates. Generally, speed scaling is applied so long as the repetition rate is greater than or equal to a minimum speed scaling repetition rate, referred to herein as the "speed scaling limit," which can be reached, for example, when T = Tₒ, when T = T_{d}, or when the process efficiency falls to a minimum acceptable level. When the repetition rate is less than the minimum speed scaling repetition rate, the RMLA operates in dwell mode.

In embodiments, when the repetition rate falls below the minimum speed scaling repetition rate, and the RMLA transitions from speed scaling mode to dwell mode, the motion profile shape is maintained without further change, while the separation Tₛ between discrete actuation cycles is increased. This approach can be optimal, for example, if the speed scaling limit is reached when T = T_{d}. In other embodiments where the speed scaling limit is reached at a cycle length T that is longer than T_{d}, T is reduced when the RMLA transitions to operating in dwell mode, for example such that T = T_{d} for each of the discrete dwell mode actuation cycles, which are increasingly separated from each other as the rep rate is further decreased.

One general aspect of the present invention is a repetitive motion linear actuator system that includes a controller, and a repetitive motion linear actuator (RMLA) configured, under control of the controller, to repetitively apply a linear actuation cycle to a process, said linear actuation cycle being characterized by a motion profile shape having a cycle length, said process being configured to operate at a maximum operating efficiency when the cycle length is equal to an optimal cycle length To.

The controller is configured to accept a minimum speed scaling repetition rate, accept a commanded repetition rate, compare the commanded repetition rate with the minimum speed scaling repetition rate, when the commanded repetition rate is greater than or equal to the minimum speed scaling repetition rate, operate the RMLA in a speed scaling mode by causing the linear actuation cycle to be continuously repeated at the commanded repetition rate, said motion profile shape being speed scaled such that the cycle length is equal to the inverse of the commanded repetition rate, and when the commanded repetition rate is less than the minimum speed scaling repetition rate, operate the RMLA in a dwell mode by causing the linear actuation cycle to be discontinuously repeated at the commanded repetition rate, such that the actuation cycles are separated by periods when actuation is not applied, and such that the cycle length of the actuation cycles is less than the inverse of the commanded repetition rate.

The controller is configured to select automatically between said speed scaling mode and said dwell mode according to the commanded repetition rate and the minimum speed scaling repetition rate.

In embodiments, when the RMLA is operated in dwell mode, the cycle length is equal to the inverse of the minimum speed scaling repetition rate. Or, the cycle length can be less than the inverse of the minimum speed scaling repetition rate. In some of these embodiments, when the RMLA is operated in dwell mode, the cycle length is equal to To. In other of these embodiments, when the RMLA is operated in dwell mode, the cycle length is equal to a desired cycle length Td that is greater than To.

In any of the above embodiments, the motion profile shape can be sinusoidal. Or, the motion profile shape can combine periods of deceleration and acceleration near extremes of the motion profile shape with motion at a constant speed between the periods of deceleration and acceleration.

In any of the above embodiments, the RMLA can be configure to actuate a shaft that drives a piston.

A second general aspect of the present invention is a method of controlling a repetitive motion linear actuator (RMLA). The method includes accepting a minimum speed scaling repetition rate, accepting a commanded repetition rate, comparing the minimum speed scaling repetition rate with the commanded repetition rate, and causing the RMLA to repetitively apply a linear actuation cycle to a process at the commanded repetition rate, said linear actuation cycle being characterized by a motion profile shape having a cycle length, said process being configured to operate at a maximum operating efficiency when the cycle length is equal to an optimal cycle length To.

Causing the RMLA to repetitively apply the linear actuation cycle to the process at the commanded repetition rate comprises automatically selecting between a speed scaling mode and a dwell mode, wherein, when the commanded repetition rate is greater than or equal to the minimum speed scaling repetition rate, the RMLA is operated in the speed scaling mode by causing the linear actuation cycle to be continuously repeated at the commanded repetition rate, said motion profile shape being speed scaled such that the cycle length is equal to the inverse of the commanded repetition rate.

When the commanded repetition rate is less than the minimum speed scaling repetition rate, the RMLA is operated in the dwell mode by causing the linear actuation cycle to be discontinuously repeated at the commanded repetition rate, such that the actuation cycles are separated by periods when actuation is not applied, and such that the cycle length of the actuation cycles is less than the inverse of the commanded repetition rate.

In embodiments, when the RMLA is operated in dwell mode, the cycle length is equal to the inverse of the minimum speed scaling repetition rate;

In any of the above embodiments, when the RMLA is operated in dwell mode, the cycle length can be less than the inverse of the minimum speed scaling repetition rate. Or, when the RMLA is operated in dwell mode, the cycle length can be equal to To. In some of these embodiments, when the RMLA is operated in dwell mode, the cycle length is equal to a desired cycle length Td that is greater than To.

In any of the above embodiments, the motion profile shape can be sinusoidal, or the motion profile shape combines periods of deceleration and acceleration near extremes of the motion profile shape with motion at a constant speed between the periods of deceleration and acceleration.

And in any of the above embodiments, the RMLA can be configure to actuate a shaft that drives a piston.

The features and advantages described herein are not all-inclusive and, in particular, many additional features and advantages will be apparent to one of ordinary skill in the art in view of the drawings, specification, and claims. Moreover, it should be noted that the language used in the specification has been principally selected for readability and instructional purposes, and not to limit the scope of the inventive subject matter.

### BRIEF DESCRIPTION OF THE DRAWINGS

Fig. 1A is a block diagram illustrating a piston drive by a linear actuator according to the prior art;
Fig. 1B is a graph illustrating the position of a linear actuator of the prior art as a function of time;
Fig. 1C is a graph illustrating adjustment of the repetition rate of a linear actuator of the prior art by application of speed scaling;
Fig. 2 is a graph that illustrates an implementation of dwell mode to reduce the repetition rate of an RMLA without lengthening the cycle length, according to an embodiment of the present invention;
Fig. 3A is a flow diagram illustrating a method embodiment of the present invention in which the cycle length remains unchanged when the actuator transitions from speed scaling mode to dwell mode;
Fig. 3B is a flow diagram illustrating a method embodiment of the present inventio in which the cycle length is reduced when the actuator transitions from speed scaling mode to dwell mode;
Fig. 4 is a graph that illustrates transition of a linear actuator from speed scaling mode to dwell mode according to the method of Fig. 3A; and
Fig. 5 is a graph that illustrates transition of a linear actuator from speed scaling mode to dwell mode according to the method of Fig. 3B.

### DETAILED DESCRIPTION

The present invention is an apparatus and method for optimizing the operation of a process that is driven by a linear actuator over a wide range of reduced actuator repetition rates.

When it becomes necessary to increase the repetition rate of a repetitive motion linear actuator (RMLA) by speed scaling, such that the cycle length T of the motion profile shape is less than the optimal process efficiency value Tₒ, a loss of process efficiency may be unavoidable. The present invention is an apparatus and method for maintaining optimal system operation when it is necessary to reduce the repetition rate of an RMLA such that T would be longer than T_{d} if the repetition rate reduction was due entirely to speed scaling.

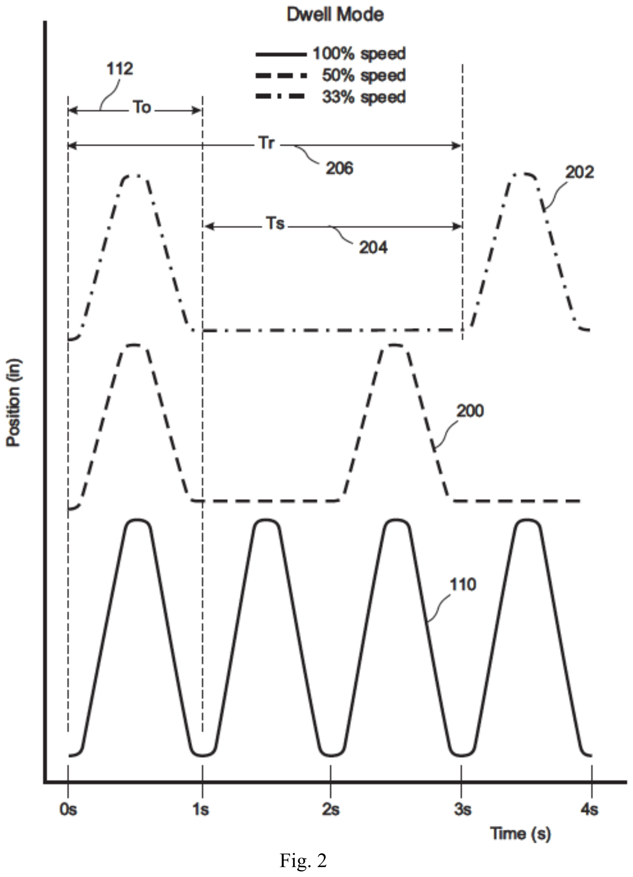

In particular, with reference to Fig. 2, the present invention implements a "dwell mode" of RMLA operation in which the motion profile shape is maintained as the rep rate is decreased, such that T remains equal to a desired value T_{d}. In Fig. 2, the RMLA initially operates continuously **110** at an optimal rep rate, referred to as **"100%** speed," which is characterized by T = Tₒ **112.** When it becomes necessary to reduce the rep rate to 50% speed **200,** and then to 33% speed **202,** instead of applying speed scaling by maintaining continuous actuation and broadening the motion profile shape, the RMLA operates in a mode that is referred to herein as "dwell mode," in which the actuation cycles of the RMLA are not continuous. Instead, discrete actuation cycles are applied, such as single up and down strokes of a piston, with the cycle length of each actuation cycle being maintained at Tₒ **112.** The discrete actuation cycles are separated by static periods Tₛ **204** during which there is no actuation, so that the actuation cycles are separated by a repetition period Tᵣ **206,** and are applied at the desired repetition rate without lengthening T. This approach enables the repetition rate to be extended almost without limit, although in some embodiments a maximum repetition period Tᵣₘₐₓ applies, such that Tᵣ **206** is not allowed to exceed Tᵣₘₐₓ, even when the RMLA is operating in dwell mode.

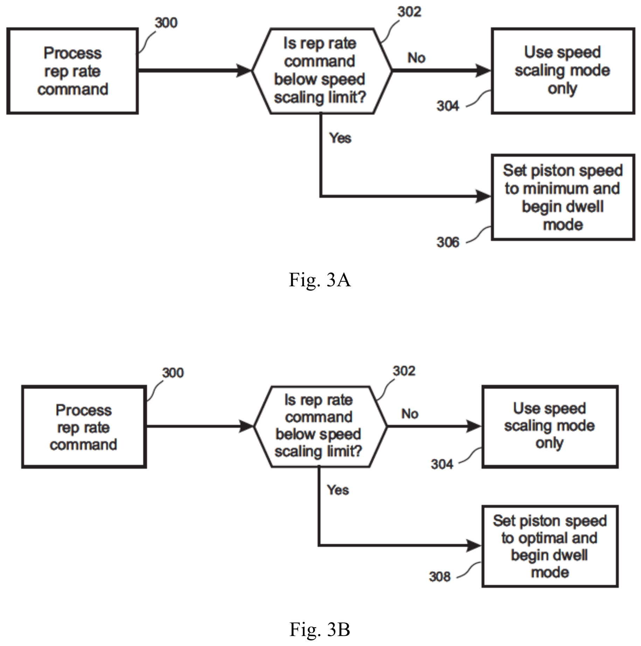

With reference to Figs. 3A and 3B, various strategies can be applied when reducing the repetition rate of an RMLA to ensure that the process efficiency remains above a minimum acceptable value even for very slow rep rates. When a process rep rate **300** command is issued, for example by a controller of the RMLA, the commanded rep rate is implemented by speed scaling **304,** unless the commanded rep rate is below the speed scaling limit **302,** in which case the RMLA transitions to dwell mode operation **306, 308.** The speed scaling limit may be reached, for example, when T = Tₒ or T = T_{d}, or when the process efficiency falls to a minimum acceptable level.

With reference to Fig. 3A, in embodiments the motion profile shape is scaled until the process efficiency reaches its minimum, i.e. until the piston speed reaches a minimum, at which point the actuator transitions to dwell mode by inserting a space Ts between each of the actuation cycles to achieve the commanded rep rate. According to this approach, the cycle length T remains at its "maximum" value Tmax **404** while the RMLA is in dwell mode. This approach may be preferred, for example, if T = T_{d} when the speed scaling limit is reached.

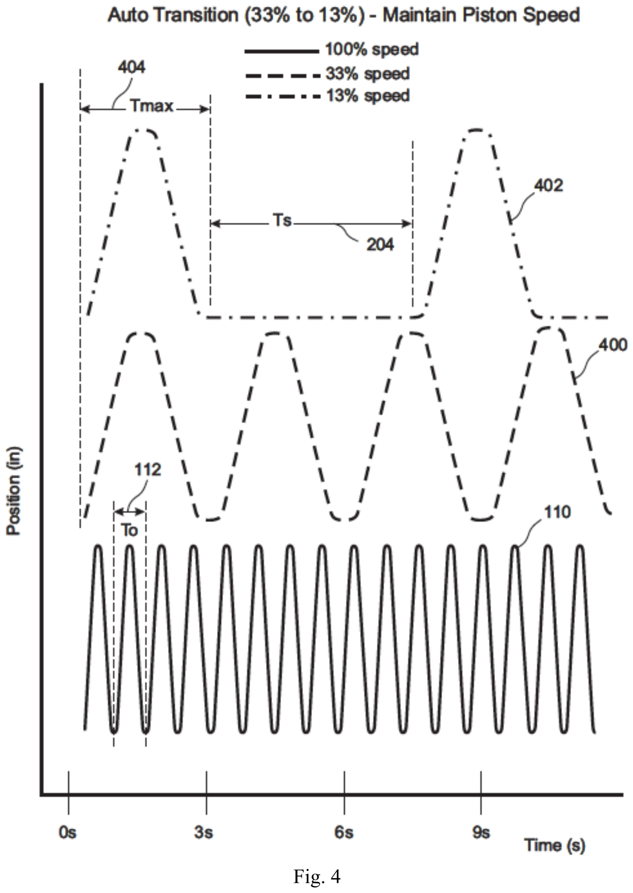

An example of this approach is illustrated in Fig. 4. When operating at **100%** speed **110,** T = Tₒ and optimal process efficiency is obtained. The repetition rate is reduced by speed scaling **400** until T is increased to its "maximum" value Tₘₐₓ **404.** At this point, the RMLA automatically transitions to dwell mode, such that T remains equal to Tₘₐₓ **404,** while further reductions in rep rate are realized **402** by increasing the spaces Tₛ **204** that are inserted between the separated actuation cycles.

With reference again to Fig. 3B, in other embodiments, when the RMLA transitions to dwell mode operation **308,** the motion profile shape is narrowed such that T = T_{d} **504,** and spaces Ts **204** are inserted between the actuation cycles to achieve the commanded rep rate. For example, this approach may be preferred if dwell mode operation introduces significant additional vibration, dynamic loads and/or shock loads applied to other mechanical parts of the system, in which case it may be desirable to delay the onset of dwell mode as long as possible as the rep rate is reduced. However, once dwell mode is implemented, it may be desirable to shorten T from Tₘₐₓ **404** to T_{d} **504,** or to Tₒ **112,** so as to optimize the process efficiency.

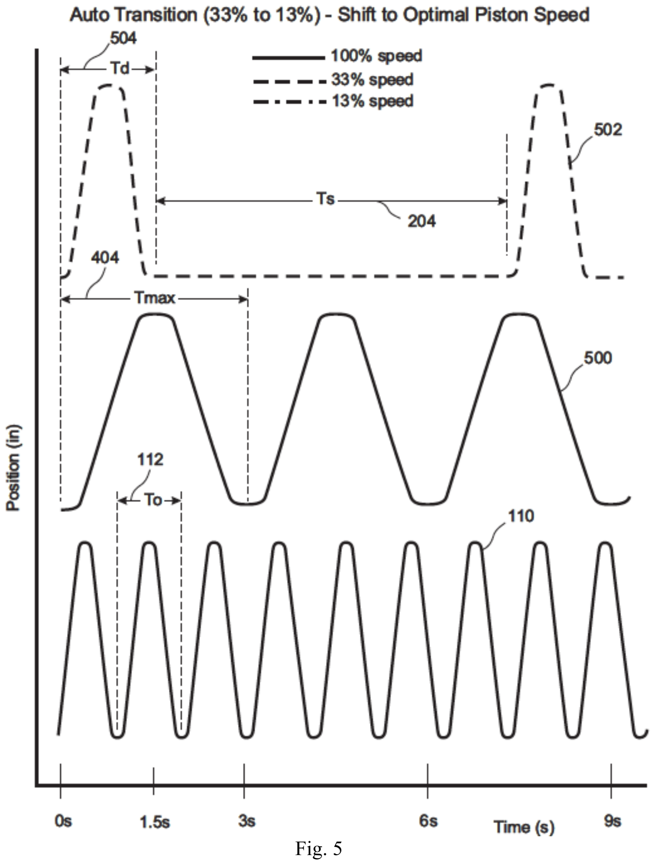

An example of this approach is illustrated in Fig. 5. When operating at **100%** speed **110,** T = Tₒ and optimal process efficiency is obtained. The repetition rate is reduced by speed scaling **500** until T is increased to its "maximum" value Tₘₐₓ **404,** which is longer than T_{d} **504.** At this point, the RMLA automatically transitions to dwell mode, whereupon the motion shape profile is narrowed such that T = T_{d} **504,** and further reductions in rep rate are realized **502** by increasing the spaces Tₛ **204** that are inserted between the separated actuation cycles.

In various embodiments, the RMLA is operated by a controller (not shown) which is configured to automatically transition between speed scaling mode and dwell mode according to specified criteria. In embodiments, the operator of the process is only required to input a repetition rate command to the controller, based upon which the controller seamlessly transitions between speed scaling mode and dwell mode, according to whether the commanded rep rate is above or below the speed scaling limit. In embodiments, the controller can be configured by the operator of the process as needed to optimize the tradeoffs between minimizing the shock loading to the system and maximizing the process efficiency.

The foregoing description of the embodiments of the invention has been presented for the purposes of illustration and description. Each and every page of this submission, and all contents thereon, however characterized, identified, or numbered, is considered a substantive part of this application for all purposes, irrespective of form or placement within the application. This specification is not intended to be exhaustive or to limit the invention to the precise form disclosed. Many modifications and variations are possible in light of this disclosure.

Although the present application is shown in a limited number of forms, the scope of the disclosure is not limited to just these forms, but is amenable to various changes and modifications. The present application does not explicitly recite all possible combinations of features that fall within the scope of the disclosure. The features disclosed herein for the various embodiments can generally be interchanged and combined into any combinations that are not self-contradictory without departing from the scope of the disclosure. In particular, the limitations presented in dependent claims below can be combined with their corresponding independent claims in any number and in any order without departing from the scope of this disclosure, unless the dependent claims are logically incompatible with each other.

## Claims

1. A repetitive motion linear actuator system comprising:
a controller; and
a repetitive motion linear actuator (RMLA) configured, under control of the controller, to repetitively apply a linear actuation cycle to a process, said linear actuation cycle being **characterized by** a motion profile shape having a cycle length, said process being configured to operate at a maximum operating efficiency when the cycle length is equal to an optimal cycle length Tₒ;
wherein the controller is configured to:
accept a minimum speed scaling repetition rate;
accept a commanded repetition rate;
compare the commanded repetition rate with the minimum speed scaling repetition rate;
when the commanded repetition rate is greater than or equal to the minimum speed scaling repetition rate, operate the RMLA in a speed scaling mode by causing the linear actuation cycle to be continuously repeated at the commanded repetition rate, said motion profile shape being speed scaled such that the cycle length is equal to the inverse of the commanded repetition rate; and
when the commanded repetition rate is less than the minimum speed scaling repetition rate, operate the RMLA in a dwell mode by causing the linear actuation cycle to be discontinuously repeated at the commanded repetition rate, such that the actuation cycles are separated by periods when actuation is not applied, and such that the cycle length of the actuation cycles is less than the inverse of the commanded repetition rate; said controller being configured to select automatically between said speed scaling mode and said dwell mode according to the commanded repetition rate and the minimum speed scaling repetition rate.

2. The repetitive motion linear actuator system of claim 1, wherein when the RMLA is operated in the dwell mode, the cycle length is equal to the inverse of the minimum speed scaling repetition rate.

3. The repetitive motion linear actuator system of claim 1, wherein when the RMLA is operated in the dwell mode, the cycle length is less than the inverse of the minimum speed scaling repetition rate.

4. The repetitive motion linear actuator system of claim 3, wherein when the RMLA is operated in the dwell mode, the cycle length is equal to Tₒ.

5. The repetitive motion linear actuator system of claim 3, wherein when the RMLA is operated in the dwell mode, the cycle length is equal to a desired cycle length T_{d} that is greater than Tₒ.

6. The repetitive motion linear actuator system of any preceding claim, wherein the motion profile shape is sinusoidal.

7. The repetitive motion linear actuator system of any of claims 1-5, wherein the motion profile shape combines periods of deceleration and acceleration near extremes of the motion profile shape with motion at a constant speed between the periods of deceleration and acceleration.

8. The repetitive motion linear actuator system of any preceding claim, wherein the RMLA is configure to actuate a shaft that drives a piston.

9. A method of controlling a repetitive motion linear actuator (RMLA), the method comprising:
accepting a minimum speed scaling repetition rate;
accepting a commanded repetition rate;
comparing the minimum speed scaling repetition rate with the commanded repetition rate; and
causing the RMLA to repetitively apply a linear actuation cycle to a process at the commanded repetition rate, said linear actuation cycle being **characterized by** a motion profile shape having a cycle length, said process being configured to operate at a maximum operating efficiency when the cycle length is equal to an optimal cycle length Tₒ;
wherein causing the RMLA to repetitively apply the linear actuation cycle to the process at the commanded repetition rate comprises automatically selecting between a speed scaling mode and a dwell mode, wherein:
when the commanded repetition rate is greater than or equal to the minimum speed scaling repetition rate, the RMLA is operated in the speed scaling mode by causing the linear actuation cycle to be continuously repeated at the commanded repetition rate, said motion profile shape being speed scaled such that the cycle length is equal to the inverse of the commanded repetition rate; and
when the commanded repetition rate is less than the minimum speed scaling repetition rate, the RMLA is operated in the dwell mode by causing the linear actuation cycle to be discontinuously repeated at the commanded repetition rate, such that the actuation cycles are separated by periods when actuation is not applied, and such that the cycle length of the actuation cycles is less than the inverse of the commanded repetition rate.

10. The method of claim 9, wherein when the RMLA is operated in the dwell mode, the cycle length is equal to or less than the inverse of the minimum speed scaling repetition rate.

11. The method of claim 9, wherein when the RMLA is operated in the dwell mode, the cycle length is less than the inverse of the minimum speed scaling repetition rate.

12. The method of claim 11, wherein when the RMLA is operated in the dwell mode, the cycle length is equal to Tₒ.

13. The method of claim 11, wherein when the RMLA is operated in the dwell mode, the cycle length is equal to a desired cycle length T_{d} that is greater than Tₒ.

14. The method of any of claims 9-13, wherein the motion profile shape is sinusoidal.

15. The method of any of claims 9-13, wherein the motion profile shape combines periods of deceleration and acceleration near extremes of the motion profile shape with motion at a constant speed between the periods of deceleration and acceleration.
